# EUROPEAN PATENT APPLICATION

(11) **EP 2 687 311 A1**
(43) Date of publication of application: **22.01.2014**
(21) Application number: 12760688.7
(22) Date of filing: 27.01.2012
(51) Int. Cl.: B23K 9/23, B23K 9/00, B23K 9/04, B23K 31/00, B23K 103/18

(54) **WELDING STRUCTURE AND WELDING METHOD**

(30) Priority: 18.03.2011 JP 2011061350
(71) Applicant: Mitsubishi Heavy Industries, Ltd., Tokyo 108-8215 (JP)
(72) Inventor: KAWASAKI, Kenji, Tokyo 108-8215 (JP); TOYODA, Masahiko, Tokyo 108-8215 (JP); KANASAKI, Hiroshi, Tokyo 108-8215 (JP); INOUE, Tomoyuki, Tokyo 108-8215 (JP); HIRO, Takafumi, Tokyo 108-8215 (JP); KAWAGUCHI, Seiichi, Kakogawa-shi Hyogo 675-0031 (JP); KITAMURA, Kosuke, Tokyo 108-8215 (JP); OTA, Tomohisa, Tokyo 108-8215 (JP); NAKAJIMA, Nobutaka, Tokyo 108-8215 (JP)
(74) Representative: HOFFMANN EITLE
(86) International application number: PCT/JP2012/051791
(87) International publication number: WO 2012/127900

(57) **Abstract**

A welding structure (30A) includes a welding layer (60A) which is configured of a first built-up layer (33) which is formed of low-alloy steel or carbon steel having a carbon content of less than low-alloy steel and which is formed on a base metal (31), a second built-up layer (34) which is formed of a 600-type nickel-based alloy and which is formed on the first built-up layer (33) and a third built-up layer (35) which is formed of a 690-type nickel-based alloy and which is formed on the second built-up layer (34).

## Description

### Technical Field

The present invention relates to a welding structure which is formed by performing built-up welding and joint welding in a steam generator, a nuclear reactor pressure vessel, or the like, and a welding method thereof.

Priority is claimed on Japanese Patent Application No. 2011-061350, filed March 18, 2011, the content of which is incorporated herein by reference.

### Background Art

In an inner wall surface of a primary side vessel including a tube plate or a water chamber in a steam generator, austenitic stainless steel or a nickel-based alloy is built-up welded on a surface of a base metal formed of low-alloy steel, for example, and thus, corrosion resistance is improved (for example, refer to PTL 1).

As the austenitic stainless steel, a 308-type or 308L-type weld metal is known, and as the nickel-based alloy, a 690-type nickel-based alloy (for example, INCONEL 690 (Registered Trademark)) is known.

Meanwhile, a pipe is connected to a nozzle stub, which is provided in a water inlet and a water outlet of a steam generator or a nuclear reactor pressure vessel, through a safe end. The safe end is a short pipe formed of stainless steel and is connected to the nozzle stub by butt welding. Moreover, a partition plate of a nickel-based alloy is welded to an inner wall of the water chamber in the steam generator, a portion of the partition plate is also welded to the tube plate, and thus, the primary side vessel is partitioned into two sections. As the nickel-based alloy, a 690-type nickel-based alloy (for example, INCONEL 690 (Registered Trademark)) is known.

As an example of a welding structure of the joint welding, (1) a welding structure which includes a built-up layer of the 690-type nickel-based alloy formed on the water chamber or a nozzle stub which performs as a base metal formed of low-alloy steel, and a joint welding layer of the 690-type nickel-based alloy which joint welds the built-up layer and the partition plate or the safe end, and (2) a welding structure which includes a built-up layer of austenitic stainless steel formed on the water chamber which performs as a base metal formed of low-alloy steel, and a joint welding layer of the 690-type nickel-based alloy which joint welds the built-up layer and the partition plate are known.

### Citation List

### Patent Literature

[PTL 1] Japanese Unexamined Patent Application, First Publication No. 2008-212945

### Summary of Invention

### Problem to be Solved by the Invention

However, when the 690-type nickel-based alloy or the austenitic stainless steel is built-up welded to a base metal to form the above-described welding structure, the base metal is denatured due to heat input, and thus, a heat-affected zone is generated in the base metal near the fusion boundary. For alleviation of residual stress, softening of the heat-affected zone, and hydrogen removal, it is necessary to perform heat treatment on the heat-affected zone.

Here, for example, carbon of approximately 0.2% is contained in the base metal formed of the low-alloy steel, as described above. Accordingly, carburizing is generated during welding and heat treatment. The carburizing is a phenomenon in which carbon components diffuse and migrate into the 690-type nickel-based alloy or the austenitic stainless steel from the base metal.

In this way, where the carbon components migrate into the 690-type nickel-based alloy or the austenitic stainless steel, a hardened layer is generated near a fusion boundary of a nickel-based alloy or austenitic stainless steel to which carbon components migrate. Where the hardened layer exists near a boundary between the low-alloy steel having iron as a main component and the 690-type nickel-based alloy or the austenitic stainless steel, that is, near a boundary of dissimilar weld joint, there is a problem in that, risk, in which a disbonding occurs in a boundary between the base metal and a built-up welding metal, is increased. Moreover, it is considered that not only average concentration of carbon in the base metal but also segregation or the like of a very small amount of components including carbon in the base metal influences the occurrence of carburizing and disbonding to the built-up welding metal.

The present invention is made in consideration of the above-described problems, and an object thereof is to provide a welding structure and a welding method capable of preventing a disbonding.

### Means for Solving the Problem

That is, according to an aspect of the present invention, there is provided a welding structure which includes a first base member formed of low alloy steel and a welding layer formed on the first base member. The welding layer includes a first built-up layer which is formed of a low-alloy steel or carbon steel having a carbon content of less than the low-alloy steel and which is formed on the first base member and a second built-up layer which is formed of one of a nickel-based alloy and stainless steel and which is formed on the first built-up layer.

According to the welding structure of the aspect, since the low-alloy steel or the carbon steel having a low amount of carbon, in which a very small amount of components are managed, is interposed between the second built-up layer formed of the nickel-based alloy or the austenitic stainless steel and the first base member including the low-alloy steel, when the heat treatment is performed to the heat-affected zone of the first base member, for example, the carbon components can be suppressed from diffusing and migrating to the nickel-based alloy or the austenitic stainless steel.

That is, since only the low-alloy steel or the carbon steel with a low carbon content having a carbon content of less than the low-alloy steel contacts the second built-up layer formed of the nickel-based alloy or the austenitic stainless steel, and a very small amount of components are managed, migrating of carbon or small amount of components to nickel-based alloy or the austenitic stainless steel can be decreased. Thereby, a disbonding in the boundary of dissimilar weld joint between the low carbon steel having iron as a main component and the nickel-based alloy or the austenitic stainless steel can be suppressed.

Moreover, in the welding structure according to the present invention, the welding layer may further include a third built-up layer which is formed of a nickel-based alloy having a nickel content of less than the second built-up layer and a chromium content of larger than the second built-up layer, and which is formed on the second built-up layer.

Thereby, the welding metal having a larger nickel content of two kinds of built-up welding metals contacts the low-alloy steel or the carbon steel with a low carbon content. Here, since nickel and carbon have poor interaction with each other, in general, the carbon of the low carbon steel positively does not migrate toward the nickel-based alloy having a larger nickel content. Therefore, carburizing to the nickel-based alloy can be further suppressed. Moreover, it is preferable in terms of corrosion resistance to increase the chromium content of the nickel-based alloy. Accordingly, for example, since the third built-up layer formed of the nickel-based alloy having a larger chromium content is formed on the surface of the welding layer when the built-up welding is performed, a high amount of corrosion resistance can be maintained.

In addition, in the welding structure according to the present invention, the welding layer, which is exposed to an inner wall surface of a primary side vessel, may be formed of the nickel-based alloy similar to the third built-up layer, and may further include a coupling welding layer in which the third built-up layer and a second base member formed of the stainless steel or the nickel-based alloy are joint welded.

Thereby, similar to the above, the first base member and the second base member can be connected with high reliability by suppressing disbonding in the boundary of dissimilar weld joint.

Moreover, since the joint welding layer is formed of a nickel-based alloy having a chromium content larger than the second built-up layer, the corrosion resistance of the coupling welding layer can be increased.

Moreover, in the welding structure according to the present invention, the carbon content of the low-alloy steel or the carbon steel with a low carbon content may be 0.1% or less.

Thereby, carburizing amount to the second built-up layer formed of the nickel-based alloy can be further decreased.

In addition, in the welding structure according to the present invention, the nickel-based alloy configuring the second built-up layer may be a 600-type nickel-based alloy, and the nickel-based alloy configuring the third built-up layer may be a 690-type nickel-based alloy.

Thereby, the welding structure, which increases corrosion resistance while securely suppressing carburizing to the nickel-based alloy, can be realized.

Moreover, in the welding structure according to the present invention, the nickel-based alloy configuring the second built-up layer may be a 600-type nickel-based alloy, and the stainless steel configuring the third built-up layer may be 308-type or 308L-type stainless steel.

Thereby, the welding structure, which increases corrosion resistance while securely suppressing carburizing to the nickel-based alloy, can be realized.

Vanadium or niobium may be added to the low-alloy steel or the carbon steel having a low carbon content configuring the first built-up layer.

Since the vanadium or the niobium has a property which catches carbon, it is possible to securely prevent carbon from diffusing from the first built-up layer to the second built-up layer.

According to another aspect of the present invention, there is provided a welding method for forming a welding layer on a first base member formed of low-alloy steel. The welding method includes a first welding process of forming a first-built up layer by performing built-up welding to the first base member by low-alloy steel or carbon steel having a carbon content of less than the low-alloy steel, a second welding process of forming a second built-up layer by performing built-up welding to the first built-up layer by a nickel-based alloy or austenitic stainless steel and a heat treatment process of performing heat treatment after welding to a heat-affected zone of the first base member which is generated by the first welding process.

According to the welding method of the aspect, since only the low-alloy steel or the carbon steel having a carbon content of less than the low-alloy steel contacts the second built-up layer formed of the nickel-based alloy or the austenitic stainless steel, carburizing amount to nickel-based alloy or mixing of the very small amount of components can be decreased. Thereby, it is possible to suppress the disbonding in the boundary of welding of different materials between the low carbon steel having iron as a main component and the nickel-based alloy or the austenitic stainless steel having nickel as a main component.

In addition, the welding method according to the present invention may further include a third welding process of performing built-up welding to the second built-up layer by using a nickel-based alloy or stainless steel, which has a nickel content of less than the second built-up layer and a chromium content of larger than the second built-up layer, as a third built-up layer. In this case, the third welding process may be performed after the second welding process and before the heat treatment process.

Therefore, carburizing to the nickel-based alloy can be further suppressed, and a high amount of corrosion resistance of the welding layer can be maintained.

Moreover, the welding method according to the present invention may further include a fourth welding process of forming joint welding layer by performing joint welding to the third built-up layer and a second base metal formed of the stainless steel or the nickel-based alloy by using the nickel-based alloy or stainless steel. In this case, the fourth welding process may be performed after the heat treatment process.

### Effects of the Invention

According to the welding structure and the welding method of the present invention, where the nickel-based alloy is the second built-up layer, since only the low-alloy steel or the carbon steel having a carbon content of less than the low-alloy steel contacts the nickel-based alloy, carburizing amount to the nickel-based alloy can be decreased. Thus, since it is possible to suppress the hardened layer from being formed due to carburizing to the nickel-based alloy, the disbonding in the boundary of dissimilar weld joint can be prevented.

### Brief Description of Drawings

FIG. 1 is a schematic configuration view of a steam generator including a welding structure according to an embodiment.
FIG. 2 is a schematic configuration view of welding structure of overlay welding which is formed on an inner wall surface of a water chamber of a steam generator according to a first embodiment.
FIG. 3 is a schematic configuration view of a welding structure of coupling welding between a nozzle stub and a safe end or between a water chamber and a partition plate in a steam generator according to a second embodiment.

### Description of Embodiments

Hereinafter, embodiments of the present invention will be described in detail with reference to drawings. Moreover, hereinafter, an example will be described in which a welding structure 30 of the present invention is applied to a steam generator 10 of a nuclear power plant.

In the steam reactor 10, a primary coolant, whose temperature and pressure are increased by a nuclear reactor vessel and a pressurizer, is introduced, heat exchange is performed between the primary coolant and a secondary coolant, and thus, the secondary coolant is evaporated.

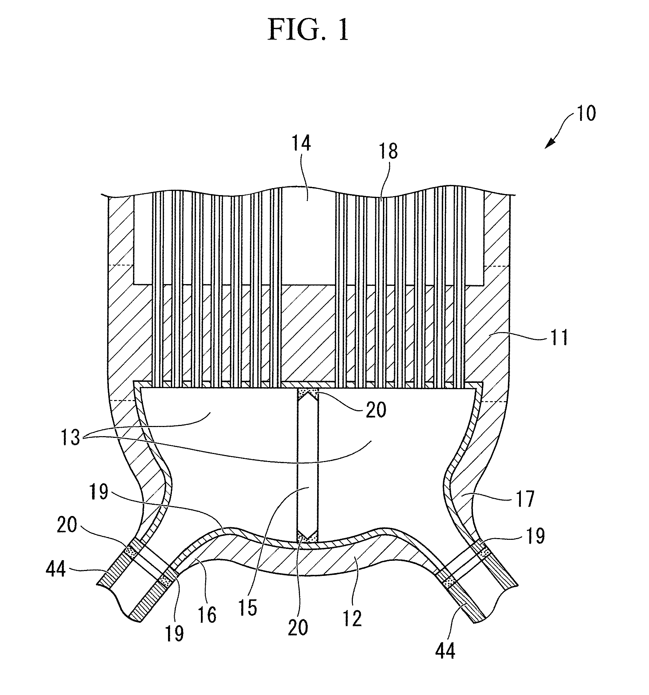

More specifically, as shown in FIG. 1, the steam generator 10 is partitioned into a primary side vessel 13 and a secondary side vessel 14 by a tube plate 11 formed of low-alloy steel. The primary side vessel is configured of the tube plate 11 and a water chamber 12 formed of low-alloy steel. U-shaped heat transfer pipes 18 are mounted to the tube plate 11. Moreover, a primary coolant inlet nozzle stub 16 and a primary coolant outlet nozzle stub 17 are formed in the water chamber 12. Short pipe shaped safe ends 44 formed of stainless steel are welded to the primary coolant inlet nozzle stub 16 and the primary coolant outlet nozzle stub 17, respectively.

The primary side vessel 13 is partitioned by a partition plate 15 formed of a nickel-based alloy. The primary coolant entering from the primary coolant inlet nozzle stub 16 is carried to the primary coolant outlet nozzle stub 17 through the heat transfer pipe 18. The primary coolant performs heat exchange with secondary side cooling water while passing through the heat transfer pipe 18, and generates steam in the secondary side vessel 14.

To avoid corrosion due to the primary coolant, built-up welding 19 of austenitic stainless steel or a nickel-based alloy is performed on an inner wall surface of the primary side vessel 13 including the tube plate 11 and the water chamber 12. The partition plate 15 is fixed to the tube plate 11 and the water chamber 12 by joint welding 20 through the built-up welding 19.

Where the partition plate 15 is directly fixed to the tube plate 11 or the water chamber 12 formed of low-alloy steel by the joint welding 20, it is necessary to perform heat treatment after the welding in order to secure performance of a heat-affected zone of the low-alloy steel side. On the other hand, the heat treatment after the welding is not needed at the time of welding of austenitic stainless steel and a nickel-based alloy, and nickel-based alloys. Therefore, due to the necessity for the heat treatment after welding or other limitations in the manufacturing, a method is applied in which the built-up welding 19 of the austenitic stainless steel or the nickel-based alloy is performed on the tube plate 11 and the inner wall surface of the water chamber 12 in advance, the heat treatment required after the welding is performed, and thereafter, the partition plate 15 is fixed by the joint welding 20.

Also in the safe end 44 which is formed in a short pipe shape and is made of stainless steel, a method is applied in which the built-up welding 19 of the austenitic stainless steel or the nickel-based alloy is performed on end surfaces of the primary coolant inlet nozzle stub 16 and the primary coolant outlet nozzle stub 17 in advance, the heat treatment required after the welding is performed, and thereafter, the safe end 44 is fixed thereto by the joint welding 20.

First, as a first embodiment, a welding structure 30A of the built-up welding 19 on the inner wall surface of the water chamber 12 will be described.

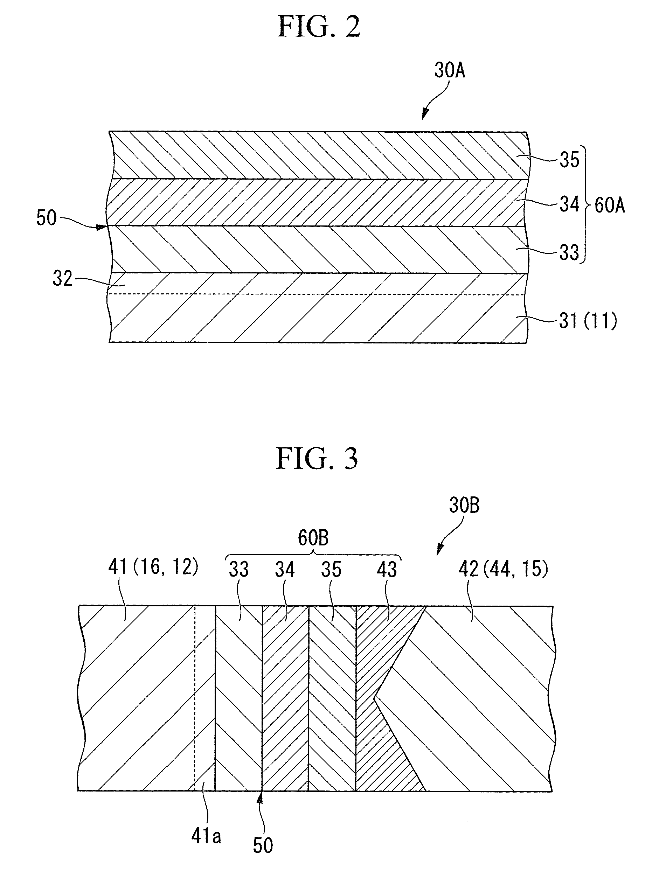

As shown in FIG. 2, the welding structure 30A has a welding layer 60A which includes a first built-up layer 33, a second built-up layer 34, and a third built-up layer 35 sequentially formed on the surface of a base metal 31 while having a device main body 11, which is formed of low-alloy steel, as the parent material 31 (first base member). A heat-affected zone 32, which is generated by welding of the first built-up layer 33, exists near the surface of the base metal 31.

The first built-up layer 33 is a layer which is formed on the base metal 31 by performing built-up welding on the surface of the base metal 31, and is formed of low-alloy steel or carbon steel having a low carbon content of 0.1% or less.

In addition, the second built-up layer 34 is a layer which is formed on the first built-up layer 33 by further performing built-up welding on the surface of the first built-up layer 33, and is formed of a 600-type nickel-based alloy (for example, INCONEL 600 (Registered Trademark)).

Moreover, the third built-up layer 35 is a layer which is formed on the second built-up layer 34 by further performing built-up welding on the surface of the second built-up layer 34, and is formed of a 690-type nickel-based alloy (for example, INCONEL 690 (Registered Trademark)).

An example of composition of the low-alloy steel configuring the base metal 31, the low-alloy steel or the carbon steel with a low carbon content configuring the first built-up layer 33, the 600-type nickel-based alloy configuring the second built-up layer 34, and the 690-type nickel-based alloy configuring the third built-up layer 35 is shown in Table 1.

**[Table 1]**

| Materials | C | Cr | Ni | Fe | Others |
|---|---|---|---|---|---|
| Low-Alloy Steel | 0.2 | 0.1 | 0.5 | 97 | 2.2 |
| Low-Alloy Steel With a Low Carbon Content | 0.1 | - | 1 | 97 | 1.9 |
| 600-Type Nickel-based Alloy | 0.03 | 15 | 70 | 10 | 4.97 |
| 690-Type Nickel-based Alloy | 0.03 | 30 | 55 | 10 | 4.97 |
| 308-Type Stainless Steel | 0.03 | 20 | 10 | 68 | 1.97 |

As shown in Table 1, the carbon content of the low-alloy steel or the carbon steel with a low carbon content configuring the first built-up layer 33 is 0.1% and is set to be less than 0.2% which is the carbon content of the low-alloy steel configuring the base metal 31.

Moreover, the nickel content of the 690-type nickel-based alloy configuring the third built-up layer 35 is 55% and is set to be less than 70% which is the nickel content of the 600-type nickel-based alloy configuring the second built-up layer 34. The chromium content of the 690-type nickel-based alloy is 30% and is set to be larger than 15% which is the chromium content of the 600-type nickel-based alloy. Moreover, the content of each element shown in Table 1 is an example and may be set to other values.

Moreover, as shown in Table 1, the low-alloy steel and the low-alloy steel or the carbon steel with a low carbon content have iron as a main component, and the 600-type nickel-based alloy and the 690-type nickel-based alloy have nickel as a main component. Thereby, in the welding structure 30A, a boundary between the first built-up layer 33 formed of the low-alloy steel or the carbon steel with a low carbon content and the second built-up layer 34 formed of 600-type nickel-based alloy is a boundary in which materials different from each other are welded, that is, a boundary 50 of welding of different materials.

Moreover, it is preferable that vanadium or niobium be added to the low-alloy steel or the carbon steel with a low carbon content configuring the first built-up layer 33.

For an example where austenitic stainless steel is used as the built-up welding having corrosion resistance, the first built-up layer 33 is the same as the above, the second built-up layer is a 600-type nickel-based alloy, and the third built-up layer is 308-type or 308L-type stainless steel.

Next, a method of forming the welding structure 30A, that is, a welding method will be described.

First, as the base metal 31, an inner wall surface of the water chamber 12 in the stream generator 10 shown in FIG. 1 which has enough range for a junction with the partition plate 15 is prepared.

Thereafter, as shown in FIG. 2, built-up welding is performed on the entire surface of the base metal 31 by using the low-alloy steel or the carbon steel with a low carbon content as a welding material (first welding process). Thereby, the first built-up layer 33 formed with a low carbon content steel is formed on the base metal 31.

Subsequently, where the nickel-based alloy is built-up welded, built-up welding is performed on the entire surface of the first built-up layer 33 by using the 600-type nickel-based alloy as a welding material (second welding process). Thereby, the second built-up layer34 formed of the 600-type nickel-based alloy is formed on the surface of the first built-up layer 33.

In addition, built-up welding is performed on the entire surface of the second built-up layer 34 by using the 690-type nickel-based alloy as a welding material (third welding process). Thereby, the third built-up layer 35 formed of the 690-type nickel-based alloy is formed on the surface of the second built-up layer 34.

Moreover, for example, these respective welding processes are performed by shielded metal arc welding.

Where the austenitic stainless steel is built-up welded, the built-up welding is performed on the entire surface of the first built-up layer 33 by using the 600-type nickel-based alloy as the welding material (second welding process). Thereby, the second built-up layer 34 formed of the 600-type nickel-based alloy is formed on the surface of the first built-up layer 33 (second welding process).

In addition, the built-up welding is performed on the entire surface of the second built-up layer 34 by using the 308-type or the 308L-type stainless steel as a welding material (third welding process). Thereby, the third built-up layer 35 formed of the austenitic stainless steel is formed on the surface of the second built-up layer 34.

Moreover, finally, heat treatment after the welding is performed with respect to the heat-affected zone 32 which is generated on the surface of the base metal 31 due to the formation of the first built-up layer 33 (heat treatment process). The heat treatment is performed by heating all of the base metal 31, the first built-up layer 33, the second built-up layer 34, and the third built-up layer 35. Thereby, alleviation of residual stress of the heat-affected zone 32 of the base metal 31, softening of the heat-affected zone 32 and hydrogen removal are achieved.

Next, effects of the welding structure 30A and the welding method described above will be described.

Here, if the nickel-based alloy is welded to the base metal 31 formed of low-alloy steel without going through the low-alloy steel or the carbon steel with a low carbon content, when the heat treatment after the welding is performed to the heat-affected zone 32 of the base metal 31, carburizing occurs in which carbon components of the base metal 31 diffuse and migrate to the nickel-based alloy through the boundary of dissimilar weld joint between the base metal 31 and the nickel-based alloy. In this way, if the carbon components migrate to the nickel-based alloy, a hardened layer is generated near the boundary of dissimilar weld joint in the nickel-based alloy, and risk of a disbonding between the base metal 31 and the nickel-based alloy is increased.

Similarly, if the austenitic stainless steel is welded to the base metal 31 formed of low-alloy steel without going through the low-alloy steel or the carbon steel with a low carbon content, where the heat treatment after the welding is performed to the heat-affected zone 32 of the base metal 31, carburizing occurs in which carbon components of the base metal 31 diffuse and migrate to the austenitic stainless steel through the boundary of dissimilar weld joint between the base metal 31 and the austenitic stainless steel. In this way, if the carbon components migrate to the austenitic stainless steel, a hardened layer is generated near the boundary of dissimilar weld joint in the austenitic stainless steel, and risk of a disbonding between the base metal 31 and the austenitic stainless steel is increased.

On the other hand, according to the welding structure 30A and the welding method of the present embodiment, since the first built-up layer 33 formed of the low-alloy steel or the carbon steel with a low carbon content is interposed between the second built-up layer 34 formed of the 600-type nickel-based alloy and the base metal 31 formed of low-alloy steel, when the heat treatment after the welding is performed to the heat-affected zone 32 of the base metal 31, the carbon components can be suppressed from diffusing and migrating to the second built-up layer 34.

That is, since only the low-alloy steel or the carbon steel having a carbon content of less than the low-alloy steel of the base metal contacts the second built-up layer 34 formed of the 600-type nickel-based alloy, the carburizing to the 600-type nickel-based alloy can be decreased.

Thus, it is possible to suppress the disbonding in the boundary 50 of dissimilar weld joint between the low-alloy steel or the carbon steel with a low carbon content having iron as a main component and the 600-type nickel-based alloy having nickel as a main component.

Moreover, in the present embodiment, the 600-type nickel-based alloy contacts the low-alloy steel or the carbon steel with a low carbon content, and has larger nickel content in two kinds of nickel-based alloys of the 600-type nickel-based alloy and the 690-type nickel-based alloy.

Here, in general, since nickel and carbon have poor compatibility each other, the carbon of the low carbon steel positively does not migrate toward the nickel-based alloy having a larger nickel content. Therefore, in the present embodiment, since the 600-type nickel-based alloy having a larger nickel content contacts the low-alloy steel or the carbon steel with a low carbon content, the carburizing in the boundary 50 of dissimilar weld joint can be further suppressed.

Similarly, in the present embodiment, the 600-type nickel-based alloy having a larger nickel content between the 600-type nickel-based alloy and the stainless steel contacts the low-alloy steel or the carbon steel with a low carbon content. Therefore, in the present embodiment, since the 600-type nickel-based alloy having a larger nickel content contacts the low-alloy steel or the carbon steel with a low carbon content, the carburizing in the boundary 50 of welding different materials can be further suppressed.

Moreover, it is preferable to increase chromium content in the nickel-based alloy in terms of corrosion resistance. In the present embodiment, since the third built-up layer 35 formed of 690-type nickel-based alloy having a larger chromium content is formed on the outermost layer side of the welding layer 60A contacting the primary coolant, that is, a side which is separated farthest from the base metal 31, the corrosion resistance of the entire welding layer 60A can be improved.

Moreover, since the carbon content of the low carbon steel configuring the first built-up layer 33 is 0.1% or less, carburizing to the second built-up layer 34 contacting the low carbon steel can be further decreased.

In addition, where vanadium or niobium is added to the low carbon steel configuring the first built-up layer 33, since the vanadium or the niobium has good compatibility with carbon and a property which catches carbon, carburizing to the second built-up layer 34 can be further decreased.

Next, as a second embodiment, a welding structure 30B between the water chamber 12 and the partition plate 15 of the steam generator 10 will be described.

As shown in FIG. 3, the welding structure 30B is configured of the water chamber 12 formed of the low-alloy steel which is as a first base member 41, the partition plate 15 formed of the 690-type nickel-based alloy which is as a second base metal 42, and a welding layer 60B having a plurality of layers which connects the first base member 41 and the second base metal 42. The welding layer 60B is configured of the first built-up layer 33, the second built-up layer 34, the third built-up layer 35 and the coupling welding layer 43 which are formed in the order from the first base member 41 to the second base metal 42. In addition, a heat-affected zone 41a is generated on the surface of the first base member 41 due to the heat input when the first built-up layer 33 is welded.

The first built-up layer 33, the second built-up layer 34 and the third built-up layer 35 are configured so as to be similar to the first embodiment, and are sequentially formed on the surface of the first base member 41.

The joint welding layer 43 is a layer which is formed by performing the joint welding so as to connect the third built-up layer 35 and the second base metal 42, and in the present embodiment, is formed of the 690-type nickel-based alloy (for example, INCONEL 690 (Registered Trademark)).

In addition, also in the welding structure 30B of the present embodiment, similar to the first embodiment, the boundary between the first built-up layer 33 formed of the low-alloy steel or the carbon steel with a low carbon content and the second built-up layer 34 formed of the 600-type nickel-based alloy 34 is the boundary 50 of welding of different materials.

Next, a method of forming the welding structure 30B, that is, a welding method will be described.

First, as the first base member 41, a structural material configuring the water chamber 12 of the steam generator 10 shown in FIG. 1 is prepared.

Next, as shown in FIG. 3, similar to the first embodiment, by sequentially performing the first welding process, the second welding process and the third welding process with respect to a portion of the water chamber 12 which is to be connected to partition plate 15, the first built-up layer 33 formed of the low-alloy steel or the carbon steel with a low carbon content, the second built-up layer 34 formed of the 600-type nickel-based alloy, and the third built-up layer 35 formed of the 690-type nickel-based alloy or the 308-type or the 308L-type stainless steel are formed in layers.

Moreover, by heating all of the first base member 41, the first built-up layer 33, the second built-up layer 34, and the third built-up layer 35, the heat treatment after welding is performed to the heat-affected zone 41a of the first base member 41 generated by welding of the first built-up layer 33.

Thereafter, the outer layer side of the third built-up layer 35, that is, the surface of the side separated from the first material 41 is oppositely disposed with an interval to the end surface of the partition plate 15 which is the second base metal 42. The joint welding is performed between the third built-up layer 35 and the second base metal 42 by using the 690-type nickel-based alloy. Thus, the joint welding layer 43, which connects the third built-up layer 35 and the second base metal 42, is formed between the third built-up layer and the second base metal. The second base metal 42 may be the nickel-based alloy and also the austenitic stainless steel.

Moreover, the applied portion is not limited to the partition plate 15, and for example, may be a butt welding portion between the primary coolant inlet nozzle stub 16 and the primary coolant outlet nozzle stub 17, and the safe end 44.

Similar to the first embodiment, in the welding structure 30B and the welding method of the second embodiment, generation of the hardened layer due to the carburizing through boundary 50 of welding of different materials can also be avoided, and the risk of the disbonding between the first built-up layer 33 and the second built-up layer 34 can be decreased. Thus, connection having high reliability between the first base member 41 and the second base metal 42 can be achieved.

Moreover, since the joint welding layer 43 is formed of the 690-type nickel-based alloy having a larger chromium content compared to the 600-type nickel-based alloy configuring the second built-up layer 34, corrosion resistance of the joint welding layer 43 can be increased. According to this, it is possible to highly secure reliability of the connection between the first base member 41 and the second base metal 42 also.

As described above, the embodiments of the present invention are described in detail. However, the present invention is not limited to this as long as it does not depart from the technical ideas of the present invention, and some design modifications or the like may be performed.

For example, in the first embodiment, the example in which the first built-up layer 33, the second built-up layer 34 and the third built-up layer 35 are sequentially formed on the surface of the base metal 31 is described. However, the third built-up layer 35 may not necessarily be formed. In this case, the corrosion resistance of the entire welding layer 60A is worse than the first embodiment. However, similar to the first embodiment, since the carburizing through the boundary 50 of welding of different materials can be decreased, the risk of the occurrence of disbondings can be decreased.

In addition, in the first embodiment and the second embodiment, the example in which the 600-type nickel-based alloy is used as the second built-up layer 34 is described. However, instead of the 600-type nickel-based alloy, the second built-up layer 34 may be formed of pure nickel having a larger nickel content than the 600-type nickel-based alloy. Similar to the first embodiment and the second embodiment, also in this case, it is possible to suppress carbon from diffusing and migrating from the first built-up layer 33 formed with a low carbon content steel to the second built-up layer 34 through the boundary 50 of dissimilar weld joint.

Moreover, in this way, where pure nickel is used for the second built-up layer 34, the 600-type nickel-based alloy may be used for the third built-up layer 35. That is, the second built-up layer 34 may be configured so as to have a nickel content larger than the third built-up layer 35.

Moreover, in the first embodiment and the second embodiment, the example in which the welding structure 30A or 30B is applied to the steam generator 10 is described. However, the present invention is not limited to this, the welding structure 30A or 30B of the first embodiment and the second embodiment may be also applied to overlay welding in a tank such as a nuclear pressure vessel, a boiler, or an oil refining plant or joint welding of the piping.

### Example

Hereinafter, Example will be described.

### (Confirmation Test of Occurrence of Boundary Crack)

An occurrence of a boundary crack according to combination of weld materials was tested.

As Example, a test piece was manufactured in which low-alloy steel with a low carbon content (carbon content 0.1%) was built-up welded to low-alloy steel (carbon content 0.2%) which was a base metal and a 600-type nickel-based alloy which was a welding material was welded thereto.

In addition, as Comparative Example, a test piece was manufactured in which a 690-type nickel-based alloy which was a welding material was welded to the low-alloy steel (carbon content 0.2%) which was a base metal.

Table 1 shows chemical components of the used materials.

Moreover, after hydrogen was contained by supplying hydrogen to each of test pieces of Example and Comparative Example, a tension load was applied to each test piece, tests for confirming a situation of a boundary crack, that is, an occurrence of a disbonding in the boundary of dissimilar weld joint were performed three times in total. Determination of the occurrence of the boundary crack was performed based on an area ratio of the boundary crack in a fracture surface of the test piece after the test.

Test results are shown in Table 2. Moreover, with respect to the occurrence of the boundary crack, a relative evaluation was performed when Comparative Example was assumed to 1.

**[Table 2]**

| | Material Combination | | Occurrence of Boundary Crack | | |
|---|---|---|---|---|---|
| | Base metal | Welding Material | Test 1 | Test 2 | Test 3 |
| Example | Low-Alloy Steel with a Low Carbon Content (0.1%C) | 600-Type Nickel-Based Alloy | 0 | 0.76 | 0.79 |
| Comparative Example | Low-Alloy Steel (0.2%C) | 690-Type Nickel-Based Alloy | 1 | 1 | 1 |

From Table 2, it is understood that occurrence of the boundary crack is decreased in the test piece of Example in which the 600-type nickel-based alloy is welded to the low-alloy steel with a low carbon content compared to the test piece of Comparative Example in which the 690-type nickel-based alloy is welded to the low-alloy steel. It is considered that this is because the carbon content of the low-alloy steel with a low carbon content is less than the carbon content of the low-alloy steel, and the content of nickel having poor compatibility with carbon of the 600-type nickel-based alloy is larger than that of the 690-type nickel-based alloy. That is, since the migration amount of carbon to the 600-type nickel-based alloy which is the weld metal is suppressed in Example, the disbonding is suppressed.

From this, it was determined that risk of the disbonding in the first embodiment and the second embodiment in which the 690-type nickel-based alloy was welded to the low carbon steel could be decreased.

### (Confirmation Test of Hardness of Welding Material)

Test confirming hardness of the welding material near the boundary of dissimilar weld joint due to combination of the materials was performed.

As Example, a test piece was manufactured in which low-alloy steel with a low carbon content (carbon content 0.1%) was built-up welded to low-alloy steel (carbon content 0.2%) which was a base metal and the 600-type nickel-based alloy which was a welding material was welded thereto.

In addition, as Comparative Example, a test piece was manufactured in which the 690-type nickel-based alloy which was a welding material was welded to the low-alloy steel (carbon content 0.2%) which was a base metal.

Moreover, with respect to test pieces of Example and Comparative Example, hardness of the weld metal (600-type nickel-based alloy or 690-type nickel-based alloy) near the boundary between the base metal and the weld metal, that is, near the boundary of dissimilar weld joint was measured in five positions in total.

Test results are shown in Table 3. In addition, with respect to the hardness of Example and Comparative Example, a relative evaluation was performed when Comparative Example was assumed to 1.

**[Table 3]**

| | Material Combination | | Hardness of Welding Material Near Boundary of Dissimilar weld joint | | | | |
|---|---|---|---|---|---|---|---|
| | Base metal | Welding Material | Position 1 | Position 2 | Position 3 | Position 4 | Position 5 |
| Example | Low-Alloy Steel with a Low Carbon Content (0.1 %C) | 600-Type Nickel-Based Alloy | 0.72 | 0.71 | 0.73 | 0.8 | 0.78 |
| Comparative Example | Low-Alloy Steel (0.2%C) | 690-Type Nickel-Based Alloy | 1 | 1 | 1 | 1 | 1 |

From Table 3, it is understood that the hardness in the test piece of Example in which the 600-type nickel-based alloy is welded to the low-alloy steel with a low carbon content is smaller than the hardness of the test piece of Comparative Example in which the 690-type nickel-based alloy is welded to the low-alloy steel. Similar to the confirmation test of the occurrence of the boundary crack, it is also considered that this is because the carbon content of the low-alloy steel with a low carbon content is less than the carbon content of the low-alloy steel, and the content of nickel having poor compatibility with carbon of the 600-type nickel-based alloy is larger than that of the 690-type nickel-based alloy. That is, in Example, since the migration amount of carbon to the 600-type nickel-based alloy which is the weld metal is suppressed, an increase in the hardness is suppressed.

From this, it was determined that an increase in the hardness in the first embodiment and the second embodiment in which the 690-type nickel-based alloy was welded to the low carbon steel could be suppressed, and as a result, risk of disbonding could be decreased.

### Industrial Applicability

According to the welding structure of the present invention, carburizing amount to the nickel-based alloy can be decreased. Thus, since it is possible to suppress the hardened layer from being formed due to carburizing to the nickel-based alloy, the disbonding in the boundary of dissimilar weld joint can be prevented.

### Reference Signs List

10: steam generator
11: tube plate
12: water chamber
13: primary side vessel
14: secondary side vessel
15: partition plate
16: primary coolant inlet nozzle stub
17: primary coolant outlet nozzle stub
18: heat transfer pipe
19: built-up welding
20: joint welding
30: welding structure
30A: welding structure
30B: welding structure
31: base metal
32: heat-affected zone
33: first built-up layer
34: second built-up layer
35: third built-up layer
41: first base member
41a: heat-affected zone
42: second base metal
43: joint welding layer
44: safe end
50: boundary of dissimilar weld joint
60A: welding layer
60B: welding layer

## Claims

1. A welding structure comprising:
a first base member formed of low alloy steel; and
a welding layer formed on the first base member,
wherein the welding layer includes:
a first built-up layer which is formed of low-alloy steel or carbon steel with a low carbon content of less than the low-alloy steel and which is formed on the first base member; and
a second built-up layer which is formed of one of a nickel-based alloy and stainless steel and which is formed on the first built-up layer.

2. The welding structure according to claim 1,
wherein the welding layer further includes a third built-up layer which is formed of a nickel-based alloy having a nickel content of less than the second built-up layer and a chromium content of larger than the second built-up layer, and which is formed on the second built-up layer.

3. The welding structure according to claim 2,
wherein the welding layer further includes a joint welding layer which is formed of the nickel-based alloy similar to the third built-up layer or stainless steel, and which joint welds the third built-up layer and a second base metal formed of the stainless steel or the nickel-based alloy.

4. The welding structure according to any one of claims 1 to 3,
wherein carbon content of the low-alloy steel or the carbon steel with a low carbon content is 0.1% or less.

5. The welding structure according to any one of claims 1 to 4,
wherein the nickel-based alloy configuring the second built-up layer is a 600-type nickel-based alloy, and
wherein the nickel-based alloy configuring the third built-up layer is a 690-type nickel-based alloy.

6. The welding structure according to any one of claims 1 to 4,
wherein the nickel-based alloy configuring the second built-up layer is a 600-type nickel-based alloy, and
wherein the stainless steel configuring the third built-up layer is 308-type or 308L-type stainless steel.

7. The welding structure according to any one of claims 1 to 6,
wherein vanadium or niobium is added to the low-alloy steel or the carbon steel with a low carbon content configuring the first built-up layer.

8. A welding method for forming a welding layer on a first base member formed of low-alloy steel, the method comprising:
a first welding process of forming a first-built up layer by performing built-up welding to the first base member by using low-alloy steel or carbon steel having a carbon content of less than the low-alloy steel;
a second welding process of forming a second built-up layer by performing built-up welding to the first built-up layer by using a nickel-based alloy or austenitic stainless steel; and
a heat treatment process of performing heat treatment after welding to a heat-affected zone of the first base member which is generated by the first welding process.

9. The welding method according to claim 8, further comprising:
a third welding process of performing built-up welding to the second built-up layer by using a nickel-based alloy or stainless steel, which has a nickel content of less than the second built-up layer and a chromium content of larger than the second built-up layer, as a third built-up layer,
wherein the third welding process is performed after the second welding process and before the heat treatment process.

10. The welding method according to claim 8 or 9, further comprising:
a fourth welding process of forming joint welding layer by performing joint welding to the third built-up layer and a second base metal formed of the stainless steel or the nickel-based alloy through the nickel-based alloy or stainless steel,
wherein the fourth welding process is performed after the heat treatment process.
